Europäisches Patentamt

European Patent Office

Office européen des brevets

(11) Publication number: 0 378 031
A1

## EUROPEAN PATENT APPLICATION

(21) Application number: 89420502.0

(22) Date of filing: 20.12.89

(51) Int. Cl.⁵: C08G 63/185, C08L 67/02

(30) Priority: 23.12.88 US 288821

(43) Date of publication of application:
18.07.90 Bulletin 90/29

(84) Designated Contracting States:
ES GR

(71) Applicant: EASTMAN KODAK COMPANY
343 State Street
Rochester, New York 14650(US)

(72) Inventor: Morris, John Craft c/o Eastman
Kodak Company
Patent Department 343 State Street
Rochester New York 14650(US)
Inventor: Jackson, Winston Jerome Jr. c/o
Eastman Kodak Co
Patent Department 343 State Street
Rochester New York 14650(US)

(74) Representative: Parent, Yves et al
Kodak-Pathé Département Brevets et
Licences CRT 60/1 -Zone Industrielle
F-71102 Chalon-sur-Saône Cédex(FR)

(54) Polyester from 4,4'-biphenyldicarboxylic acid and 1,6-hexanediol.

(57) Disclosed is a polyester from 4,4'-biphenyldicarboxylic acid and 1,6-hexanediol having an inherent viscosity of at least 1.2. The polyester has a combination of unexpectedly high tensile strength and improved toughness, and can be injection molded over a broad molding temperature range.

EP 0 378 031 A1

## POLYESTER FROM 4,4'-BIPHENYLDICARBOXYLIC ACID AND 1,6-HEXANEDIOL

### Field of the Invention

The present invention concerns a polyester from 4,4'-biphenyldicarboxylic acid and 1,6-hexanediol having an inherent viscosity of at least 1.2. The polyester exhibits a combination of unexpectedly high tensile strength and improved toughness and can be injection molded over a broad molding temperature range.

### Background of the Invention

U.S. 4,742,151 discloses ultra-high-molecular weight polyesters prepared from aromatic dicarboxylic acids and certain alkylene glycols containing from 2 to 6 carbons having an intrinsic viscosity greater than 1.5. 4,4'-Biphenyldicarboxylic acid is disclosed in a list of dicarboxylic acids useful to the invention but 1,6-hexanediol is not specifically disclosed. Our invention does not require the special process used to prepare the polyesters described in the specification of U.S. 4,742,151.

Other art concerning 4,4'-biphenyldicarboxylic acid polyesters is described below.

Homopolyesters of 4,4'-biphenyldicarboxylic acid and certain aliphatic glycols are disclosed in the literature. Homopolyesters of 4,4'-biphenyldicarboxylic acid and ethylene glycol, 1,4-butanediol, and 1,6-hexanediol are disclosed by Meurisse et al in the British Polymer Journal, Volume 13, page 57 (1981) (Table 1). Meurisse discloses a homopolyester of 4,4'-biphenyldicarboxylic acid and 1,6-hexanediol having an inherent viscosity (I.V.) of 0.94 measured in phenol/tetrachloroethane solvent. (The I.V. of this polymer is 1.14 in our solvent system.) Jackson and Morris include a review of homopolyesters from 4,4'-biphenyldicarboxylic acid and various aliphatic glycols in the Journal of Applied Polymer Science, Applied Polymer Symposia, 41, 307-326 (1985). Krigbaum et al disclose relatively low molecular weight homopolyesters from 4,4'-biphenyldicarboxylic acid and various aliphatic glycols in the Journal of Applied Polymer Science, Polymer Letters Edition, 20, 109-115 (1982). Low molecular weight homopolyesters of 4,4'-biphenyldicarboxylic acid are also disclosed by Wanatabe et al, Macromolecules, 21(1), p. 278-280 (1988), and Krigbaum et al, Polymer, 24(10), pp. 1299-1307 (1983). Jpn. Kokai Tokkyo Koho JP 61,236,821 [86,236,821] (1986) also discloses low molecular weight polyesters from 4,4'-biphenyldicarboxylic acid and 1,4-butanediol prepared below their melting temperatures in a nonvolatile liquid. Polyesters of 1,6-hexanediol and 4,4'-biphenyldicarboxylic acid are disclosed in Kobunshi Ronbunshu, Vol. 44(12), 983-986 (December 1987) having limiting viscosity number of about 0.31.

U.S. 3,842,040 and U.S. 3,842,041 disclose the homopolyester of 4,4'-biphenyldicarboxylic acid and ethylene glycol.

### Summary of the Invention

The present invention is directed to a polyester comprising

(A) an acid component comprising repeating units of at least about 70 mol % of 4,4'-biphenyldicarboxylic acid, and

(B) a glycol component comprising repeating units of at least about 80 mol % of 1,6-hexanediol, wherein the total mol % of acid component and glycol component are each 100 mol %; said polyester having a weight average molecular weight of at least about 60,000 by gel permeation chromatography; and said polyester having an inherent viscosity of at least 1.2 determined at 25°C in 25/35/40 (wt./wt./wt.) phenol/tetrachloroethane/p-chlorophenol at a concentration of 0.1 gram (g)/100 milliliters (ml).

The present invention is also directed to a composition comprising:

(i) about 30 to 99 weight percent of the polyester of the present invention, and

(ii) about 1 to 70 weight percent of at least one property modifier.

### Detailed Description of the Invention

The homopolyester of 4,4'-biphenyldicarboxylic acid (BDA) and 1,6-hexanediol (HD) is disclosed in the prior art but the polymer is of low molecular weight having I.V.'s of, for example, less than 0.5. Meurisse reports preparation of the (BDA)(HD) homopolymer with an inherent viscosity of about 0.94 measured in phenol/tetrachloroethane solvent (see Background section), or about 1.12 in our solvent system. The other homopolymers of 4,4'-biphenyldicarboxylic acid with ethylene glycol or 1,4-butanediol which Meurisse reports have very low inherent viscosities (I.V.'s <0.3). The prior art describes molding, spinning, and film extrusion as viable processes for shaping polyesters based on 4,4'-biphenyldicarboxylic acid but typically no mechanical properties are reported. Further, we are not aware of the disclosure of any linear condensation polyesters based on aliphatic glycols and dicarboxylic acids having the molecular weights we disclose here. We have discovered that the homopolyester of BDA and HD, which is relatively brittle and difficult to mold consistently, exhibits excellent molding plastic properties when the inherent viscosity is at or above 1.2 in the molded or shaped part. Typically, the weight average molecular weight determined by gel permeation chromatography (GPC) is at least about 60,000. Below this I.V. and molecular weight the polymer has poor notched Izod impact strength (e.g., <0.6 ft-lb/in) and reduced tensile strength (usually less than 12,000 pounds per square inch (psi)). At 1.30 and 1.36 I.V., the homopolyester has exceptionally high tensile strength, more than twice that of the 1.14 I.V. disclosed by Meurisse in the art.

In order to obtain high tensile strength (e.g., >20,000 psi) from (BDA)(HD) homopolyester on a typical injection molding machine, it is necessary to have an I.V. of at least about 1.2 in the injection-molded part and a set barrel temperature of about 210-220°C, the actual melt temperature being 20-40° higher at these barrel set temperatures. The molding temperature range is narrow (e.g., 10°C) for the lower I.V. polyesters of our invention having I.V.'s of about 1.2 to 1.4. This molding temperature is near the melting point of 217°C for the unmodified (BHA)(HD) homopolyester. Under these conditions the polymer would be very difficult to mold or extrude on commercial equipment. In commercial production lines, the typical injection molding barrel temperatures for crystalline thermoplastics is usually at least 20 to 30°C above the melting points of the polymers being molded and very little effect is observed in ultimate tensile properties and impact strength with these materials. Setting the molding temperatures for the (BDA)(HD) homopolyester of the prior art to 20 to 30°C above the polymer melting point gives injection-molded bars with inferior tensile strengths which can vary greatly with small changes in molding temperature. However, raising the I.V. to 1.30, or to 2.26, or even higher, gives a polymer having an improved, wider molding temperature range of, for example, 30°C at barrel temperatures of about 230 to 260°C. Hence, the polyesters of our invention not only have higher tensile strength than the prior art polyesters but are less subject to slight changes in molding temperature.

Table 1 of the Examples herein illustrates the combination of surprisingly high tensile strengths and molecular weights of the polyesters of our invention. It is very surprising that such high molecular weights can be attained, because these molecular weights are far higher than have been reported before for any similar polyester prepared with an aliphatic glycol. It is also surprising that such high tensile strengths can be attained, because these polyesters must be injection-molded at temperatures above the isotropic transition temperature (244°C) at which the liquid crystalline mesophase becomes isotropic (non-liquid crystalline).

In addition to these unusual properties the solvent resistance of the homopolyester is exceptional. Injection-molded tensile bars are substantially unaffected after exposure for 24 hours in toluene, 1,2-dichloroethane, methyl ethyl ketone, ethyl acetate, ethanol, water, 20% sulfuric acid, 10% sodium hydroxide, gasoline, acetone, acetic acid, 5% Clorox bleach, 50/50 water/ethanol, benzyl alcohol, 10% nitric acid, and methylene chloride.

The polyesters of this invention are prepared from 4,4'-biphenyldicarboxylic acid and/or its esters and 1,6-hexanediol. Examples of useful aromatic esters are the dimethyl, diethyl, dibutyl, and diphenyl esters or any combination of mixed esters. The polyesters may be prepared from glycol esters of BDA. The polyesters may be prepared in the melt or in the solid phase or by a combination of these processes.

It is preferred that in the polyester of the present invention that the acid component comprises repeating units of at least about 80 mol % of 4,4'-biphenyldicarboxylic acid and said glycol component comprises repeating units of at least about 90 mol % of 1,6-hexanediol. It is more preferred that the acid component comprises repeating units of about 100 mol % 4,4'-biphenyldicarboxylic acid and said glycol component comprises repeating units of about 100 mol % 1,6-hexanediol.

It is preferred that the polyester has an inherent viscosity of at least about 1.6. The BDA portion of these polyesters (component (A)) may be modified with less than 30 mol %, but preferably, less than 20 mol % of other aromatic dicarboxylic acids containing 8 to 20 carbon atoms. Examples of suitable aromatic dicarboxylic acids include terephthalic, isophthalic, 1,5-, 2,6-, 2,7-naphthalenedicarboxylic, or trans-4,4'-stilbenedicarboxylic acids. The glycol portion of the polyester (component (B)) may be modified with 0 to about 20 mol %, but preferably 0 to about 10 mol %, of other aliphatic glycols having 2 to 20 carbon atoms so long as the high molecular weights are substantially retained. Examples of useful glycols are ethylene glycol, 1,2-propanediol, 1,3-propanediol, 1,4-butanediol, 1,5-pentanediol, cis- or trans-1,3- or 1,4-cyclohexanedimethanol, and p-xylene glycol.

The polyester of the present invention preferably has a tensile strength of greater than 10,000 psi.

In the composition of the present invention it is preferred that component (i) is present in an amount of about 50 to about 95 weight percent, and component (ii) is present in an amount of about 5 to about 50 weight percent.

Also, in the composition of the present invention it is preferred that said property modifier is 6,6-nylon, a poly(ether-imide), a polyphenylene oxide, a polyphenylene oxide/polystyrene blend, a different polyester, a polyphenylene sulfide, a polyphenylene sulfide/sulfone blend, a poly(estercarbonate), a polycarbonate such as Lexan from General Electric, a polysulfone ether, or a poly(ether-ketone) of aromatic dihydroxy compounds. The aromatic dihydroxy compounds used to prepare these polymers are disclosed, for example, in U.S. Patents 3,030,335 and 3,317,466. It is also preferred that component (ii) is a flame retardant such as a phosphorus compound, a halogen compound, or a halogen compound in combination with an antimony compound; a filler such as talc or mica; or a reinforcing agent such as a glass fiber, a carbon fiber, or other agent such as Kevlar (poly(1,4-phenylene terephthalamide)).

The polyester and/or composition of the present invention is preferably in the form of a fiber, a film, or a molded object.

The present invention is illustrated by the following examples; however, these examples should not be construed as a limitation upon the scope of the invention.

Inherent viscosities are determined at 25°C in 25/35/40 (wt./wt./wt.) phenol/tetrachloroethane/p-chlorophenol at a concentration of 0.1 g/100 mL.

The BDA polyesters are ground to pass a 3-mm screen. In order to obtain the highest molecular weights and inherent viscosities, the polyesters are pulverized prior to solid-state polymerization. The polymers are dried at 80-100°C in a vacuum oven for 24 hours and injection-molded on a Boy 22S molding machine or a 1-ounce (oz.) Watson-Stillman molding machine to give 1/16-inch (in.) thick D1822 Type L tensile bars and 1/8 x 1/2 x 5-inch flexure bars. The tensile strength is determined following the procedure of ASTM D638 and the Izod impact strength is determined on five breaks according to ASTM D256.

The molecular weights of the polymers are determined using a Waters Associates Gel Permeation Chromatograph equipped with a PL Gel 5-micron mixed column (Polymer Laboratories, Ltd.) containing a blend of three polystyrene/divinylbenzene resins having 5-micron particle size and resin pore sizes of $10^3$, $10^4$, $10^5$ angstroms in 70/30 methylene chloride/hexafluoroisopropanol at 25°C at an elution rate of 1 mL/minute. Injection sample volume is 25 microliters and eluted polymer is detected by UV at 254 nanometers (nm). The molecular weights are calculated relative to a poly(ethylene terephthalate) calibration.

Absolute weight average molecular weight is determined by laser light scattering techniques using a Brookhaven Photon Correlation Spectrometer. The polymer is dissolved in a solution of orthochlorophenol at 110°C and clarified by filtration through a 0.2-micron pore size Teflon membrane filter. The absolute weight average molecular weight is then determined by Zimm plot analysis of measurements of the concentration and angular dependence of 632.8 nm wavelength scattered light intensity.

EXAMPLE 1

This example illustrates the preparation of the homopolyester consisting of 100 mol % 4,4'-biphenyldicarboxylic acid units and 100 mol % 1,6-hexanediol units.

A mixture of 162.0 g (0.60 mol) dimethyl 4,4'-biphenyldicarboxylate, 85.0 g (0.72 mol) 1,6-hexanediol, and 0.14 g titanium tetraisopropoxide is placed in a 1-liter flask equipped with an inlet for nitrogen, a metal stirrer, and a short distillation column. The flask is heated at 240°C for about 1 hour, at 260°C for about 1/2 hour, and a vacuum of 0.5 mm maintained for about 1 hour. A high melt viscosity, white crystalline polymer is obtained with an I.V. of 1.30 and a melting endotherm measured by DSC at 217°C.

The polymer is injection-molded on the Watson-Stillman molding machine with a barrel temperature of 245°C to give tensile bars with an I.V. of 1.33, tensile strength of 29,900 psi, and a notched Izod impact strength of 2.9 ft-lb/in.

EXAMPLE 2

A polyester is prepared to an I.V. of 1.25 similar to that of Example 1, ground, and solid-state polymerized by heating for 1 hour at 110°C and then for 4 hours at 210°C to give a polymer with an I.V. of 2.26.

The polymer is injection-molded on the Boy 22S molding machine with a barrel temperature of 230°C to give tensile bars with an I.V. of 1.67 and a tensile strength of 29,200 psi.

The other examples in Table 1 are prepared and injection-molded in a similar manner. The first four examples in Table 1 are homopolyesters of the prior art and the remaining examples in Table 1 are the homopolyesters of our invention.

## Table 1

### Tensile Strengths of (BDA)(HD)

| Bar I.V. | Mw, GPC[a] | Molding Temp. °C[b] | Tensile Strength, psi |
|---|---|---|---|
| 0.90[b] | 44000 | 240 | 6500 |
| | - | 260 | 9600 |
| 1.00[c] | - | 260 | 11500 |
| 1.12[b] | 58000 | 260 | 9300 |
| 1.14[b,d] | 52000 | 210 | 10400 |
| 1.18[c] | 62000 | 260 | 14200 |
| 1.27[c] | 66500 | 260 | 21900 |
| 1.31[b] | 74000 | 240 | 18100 |
| 1.33[c] | 71000 | 245 | 29900 |
| 2.26[b,e] | 144000[f] | 230 | 29200 |
| 2.66[b,e] | 147000[f] | 260 | 28500 |
| 3.94[b,e] | 250000[f] | 260 | 25200 |
| 4.20 | 370000[f,g] | - | - |
| 5.39[e] | 530000[f,h] | - | - |

[a] The molecular weight data determined by GPC have an inherent error of plus or minus 15% of the measurement.

[b] These polymers are injection-molded on a Boy 22S screw-type injection molding machine. The molding temperature is the set temperature of the last two zones of the Boy 22S molding machine. The actual melt temperatures are about 20-30°C above the indicated molding temperatures.

[c] These polymers are injection-molded on a 1-oz. Watson-Stillman plunger-type molding machine. The molding temperature is the temperature of the barrel of the Watson-Stillman molding machine.

[d] The I.V. of this polymer is equivalent to that prepared by Meurisse in Brit. Poly. J., Vol. 13, p. 57 (1981).

e These inherent viscosities are before molding. Thermal degradation during molding reduces the high initial inherent viscosities of these polymers to 1.68-1.75 in the molded bar.

f The molecular weight data reported is obtained on the high molecular weight polymers before molding. Some insoluble material was detectable in the solu tion prior to making the GPC molecular weight determination.

g Laser light scattering in ortho-chlorophenol at 20° shows an absolute weight average molecular weight of 25,000.

h Laser light scattering in ortho-chlorophenol at 20°C shows an absolute molecular weight of 1,200,000.

Codes: BDA = 4,4'-biphenyldicarboxylic acid.
HD = 1,6-hexanediol.

The invention has been described in detail with particular reference to preferred embodiments thereof, but it will be understood that variations and modifications can be effected within the spirit and scope of the invention.

## Claims

1. A polyester comprising
(A) an acid component comprising repeating units of at least about 70 mol % of 4,4'-biphenyldicarboxylic acid, and
(B) a glycol component comprising repeating units of at least about 80 mol % of 1,6-hexanediol,
wherein the total mol % of acid component and glycol component are each 100 mol %; said polyester having a weight average molecular weight of at least about 60,000 by gel permeation chromatography; and said polyester having an inherent viscosity of at least 1.2 determined at 25°C in 25/35/40 (wt./wt./wt.) phenol/tetrachloroethane/p-chlorophenol at a concentration of 0.1 g./100 ml.

2. The polyester of Claim 1 wherein said acid component comprises repeating units of at least about 80 mol % of 4,4'-biphenyldicarboxylic acid and said glycol component comprises repeating units of at least about 90 mol % of 1,6-hexanediol.

3. The polyester of Claim 1 wherein said acid component comprises repeating units of about 100 mol % 4,4'-biphenyldicarboxylic acid and said glycol component comprises repeating units of about 100 mol % 1,6-hexanediol.

4. The polyester of Claim 1 wherein said inherent viscosity is at least about 1.6.

5. The polyester of Claim 1 wherein the acid component comprises greater than about 80 mol % 4,4'-biphenyldicarboxylic acid and less than about 20 mol % of at least one other aromatic dicarboxylic acid having 8 to 20 carbon atoms; and the glycol component comprises greater than about 90 mol % 1,6-hexanediol, and less than about 10 mol % of at least one other aliphatic glycol having 2 to 20 carbon atoms.

6. The copolyester of Claim 5 wherein said other dicarboxylic acid is terephthalic acid, isophthalic acid, 1,5-naphthalenedicarboxylic acid, 2,6-naphthalenedicarboxylic acid, 2,7-naphthalenedicarboxylic acid, or trans-4,4'-stilbenedicarboxylic acid; said other aliphatic glycol is 1,2-propanediol, 1,3-propanediol, 1,4-butanediol, 1,5-pentanediol, cis-1,3-cyclohexanedimethanol, trans-1,3-cyclohexanedimethanol, cis-1,4-cyclohexanedimethanol, trans-1,4-cyclohexanedimethanol, or p-xylene glycol.

7. The polyester of Claim 1 having a tensile strength of greater than 10,000 psi and excellent solvent resistance.

8. A composition comprising:
(i) about 30 to 99 weight percent of the polyester of Claim 1, and

(ii) about 1 to 70 weight percent of at least one property modifier.

9. The composition of Claim 8 wherein component (i) is present in an amount of about 50 to about 95 weight percent, and component (ii) is present in an amount of about 5 to about 50 weight percent.

10. The composition of Claim 8 wherein said property modifier is 6,6-nylon, a poly(ether-imide), a polyphenylene oxide, a polyphenylene oxide/polystyrene blend, a different polyester, a polyphenylene sulfide, a polyphenylene sulfide/sulfone blend, a poly(ester-carbonate), a polycarbonate, a polysulfone ether, a poly(ether-ketone) of aromatic dihydroxy compounds, a phosphorus compound, a halogen compound, a halogen compound in combination with an antimony compound, talc, mica, a glass fiber, or a carbon fiber.

11. The composition of Claim 8 wherein component (i) is the copolyester of Claim 3.

12. A fiber comprising the copolyester of Claim 1.

13. The fiber of Claim 12 wherein the copolyester is the copolyester of Claim 3.

14. A film comprising the copolyester of Claim 1.

15. The film of Claim 14 wherein the copolyester is the copolyester of Claim 3.

16. A molded object comprising the copolyester of Claim 1.

17. The molded object of Claim 16 wherein the copolyester is the copolyester of Claim 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | JOURNAL OF POLYMER SCIENCE: Polymer Letters Edition, vol. 20, no. 2, February 1982, pages 109-115, John Wiley & Sons Inc.; W.R. KRIGBAUM et al.: "Aromatic polyesters forming thermotropic smectic mesophases" * Page 109; table 1 * | 1-7 | C 08 G 63/185 C 08 L 67/02 |
| Y | US-A-3 960 817 (MORAWETZ et al.) * Claims 1-15; column 3, line 66 - column 4, line 26 * | 1-7 | |
| A | DE-A-1 238 665 (F.M.C. CORP.) * Claim; example 3 * | 1-7 | |
| A | FR-A-1 327 007 (AMERICAN VISCOSE CORP.) * Abstract; example 17; page 4, right-hand column, line 7 * | 1-7 | |
| A | CHEMICAL ABSTRACTS, vol. 80, no. 8, 25th February 1974, page 33, abstract no. 37881r, Columbus, Ohio, US; & JP-A-73 40 847 (TEIJIN LTD) 15-06-1973 * Abstract * | 1-17 | TECHNICAL FIELDS SEARCHED (Int. Cl.5) C 08 G C 08 L |
| A | CHEMICAL ABSTRACTS, vol. 82, no. 4, 27th January 1975, page 54, abstract no. 17814j, Columbus, Ohio, US; & JP-A-74 76 947 (TEIJIN LTD) 24-07-1974 * Abstract * | 1-8,9-17 | |
| A | US-A-2 976 266 (M.R. LYTTON et al.) * Claims 1-8 * | 1-7 | |
| A | US-A-3 008 935 (E.A. WIELICKI et al.) * Claims 1-5 * | 1-7 | |

The present search report has been drawn up for all claims

| Place of search | Date of completion of the search | Examiner |
|---|---|---|
| THE HAGUE | 23-04-1990 | DECOCKER L. |